# EUROPÄISCHE PATENTSCHRIFT

(11) **EP 0 400 639 B1**
(45) Veröffentlichungstag und Bekanntmachung des Hinweises auf die Patenterteilung: **02.11.1995**
(21) Anmeldenummer: 90110356.4
(22) Anmeldetag: 31.05.1990
(51) Int. Cl.: G01N 1/00, G01N 35/08

(54) **Anordnung zur Anreicherung von Probensubstanz für spektroskopische Zwecke bei der Fliessinjektions-Analyse**
System for enriching a probe substance for spectroscopic applications in flow-injection analysis
Système pour l'enrichissement d'une substance à tester en vue d'applications spectroscopiques en analyse du type à injection

(30) Priorität: 01.06.1989 DE 3917840
(43) Veröffentlichungstag der Anmeldung: 05.12.1990
(73) Patentinhaber: BODENSEEWERK PERKIN-ELMER GMBH, D-88662 Überlingen (DE)
(72) Erfinder: Sperling, Michael, Dr., D-7767 Sipplingen (DE)
(74) Vertreter: Grünecker, Kinkeldey, Stockmair & Schwanhäusser Anwaltssozietät

(56) Entgegenhaltungen:
- BE-A- 681 196
- US-A- 4 315 754
- ANALYTICAL CHEMISTRY. vol. 57, 1985, COLUMBUS US Seiten 21 - 25; S.D. HARTENSTEIN ET AL.: "Sensitivity enhanc. for flow inj. anal.-induct. coupled plasma atomic emiss. spect. using an on-line preconc. ion-exch. column"
- ANALYTICA CHIMICA ACTA vol. 200, 1987, AMSTERDAM, HOLLAND Seiten 35 - 49; ZHAOLUN FANG ET AL.: "Fundamental and practical considerations in the design of on line column preconcentration for flow-inj. atomic spectr. systems"
- B.Welz:"Atomabsorptionsspektrometrie", Verlag Chemie, Weinheim, 1983

## Beschreibung

### Technisches Gebiet

Die Erfindung betrifft eine Anordnung zur Anreicherung von Probensubstanz für spektroskopische Zwecke bei der Fließinjektions - Analyse, enthaltend
(a) erste Pumpmittel zum Fördern einer Probenflüssigkeit und einer Pufferflüssigkeit in eine Sammelleitung,
(b) zweite Pumpmittel zum Fördern einer eluierenden Flüssigkeit in eine Leitung,
(c) eine Ionenaustauschersäule, durch welche die zu bestimmenden Elemente zurückgehalten werden und aus welcher die zu bestimmenden Elemente von der eluierenden Flüssigkeit eluierbar sind mit einem ersten Ende und einem zweiten Ende,
(d) Mittel zum Eingeben einer Probe in ein Analysengerät, und
(e) Ventilmittel, durch welche
   - in einer ersten Ventilstellung das erste Ende der Ionenaustauschersäule mit der Sammelleitung und das zweite Ende der Ionenaustauschersäule mit einem ersten Abfallauslaß und die Mittel zum Eingeben von Probe in das Analysengerät mit einer Quelle eines Verdrängungsdruckmittels verbunden sind
   - in einer zweiten Ventilstellung das zweite Ende der Ionenaustauschersäule mit der Leitung und das erste Ende mit den Mitteln zum Eingeben von Probe in ein spektroskopisches Analysengerät, sowie die Sammelleitung mit einem zweiten Abfallauslaß verbunden sind.

### Zugrundeliegender Stand der Technik

Eine derartige Vorrichtung ist aus Hartenstein et al. in "Analytical Chemistry, 57, 1985, 21-25" bekannt.

Aus einem Aufsatz von Olsen et. al in der Zeitschrift "The Analyst", Bd. 108,905-917 ist eine Anordnung zur Anreicherung von Probensubstanz für spektroskopische Zwecke bei der Fließinjektions - Analyse bekannt. Eine Schlauchpumpe fördert in parallelen Schlauchleitungen Wasser, eine Pufferflüssigkeit in Form von Ammoniumacetat und eine eluierende Flüssigkeit in Form von Salpetersäure. In der Schlauchleitung, in welche das Wasser gefördert wird, ist ein Injektionsventil angeordnet. Das Injektionsventil enthält einen Durchgangskanal und eine Probenschleife, die wahlweise in die Strömung in der Schlauchleitung einschaltbar sind. Wenn der Durchgangskanal in die Schlauchleitung eingeschaltet ist, wird durch die Probenschleife eine Strömung von Probenflüssigkeit geleitet, so daß die Probenschleife mit Probenflüssigkeit gefüllt wird. Nach Umschalten des Injektionsventils wird die mit Probenflüssigkeit gefüllte Probenschleife in die die Wasserströmung führende Schlauchleitung eingeschaltet, so daß die Probenflüssigkeit von der Wasserströmung mitgenommen wird. Das Wasser bzw. die Probenflüssigkeit werden mit der Pufferflüssigkeit gemischt und strömen bei einer ersten Ventilstellung einer Ventilanordnung durch eine Ionenaustauschersäule, und zwar von einem ersten Ende der Ionenaustauschersäule zu einem zweiten Ende. Das zweite Ende ist mit einem Abfallauslaß verbunden. Die eluierende Flüssigkeit strömt bei der ersten Ventilstellung der Ventilanordnung zu einem Zerstäüber und wird in die Flamme eines Atomabsorptions- Spektrometers versprüht. Es erfolgt jetzt eine Anreicherung der Probe in der Ionenaustauschersäule. Anschließend wird die Ventilanordnung in eine zweite Ventilstellung umgeschaltet. In dieser zweiten Ventilstellung sind die Wasser- und die Ammoniumacetat - Schlauchleitung mit dem Abfallauslaß verbunden. Das zweite Ende der Ionenaustauschersäule ist mit der die eluiuerende Flüssigkeit führenden Schlauchleitung verbunden. Das erste Ende der Ionenaustauschersäule ist mit dem Zerstäüber des Atomabsorptions - Spektrometers verbunden. Die Ionenaustauschersäule wird von der eluierenden Flüssigkeit im Gegenstrom zu der vorherigen Strömungsrichtung durchflossen und eluiert die angereicherten zu bestimmenden Elemente in den Zerstäüber und damit in den Brenner des Atomabsorptions - Spektrometers.

Durch einen Aufsatz von Hartenstein et al In "Analytical Chemistry" 57 (1985), 21-25 und einen Aufsatz von Zhaolun Fang et al in "Analytica Chimica Acta" 200 (1987), 35-49 ist eine Anordnung bekannt, bei welcher durch eine erste Schlauchpumpe jeweis eine erste Probenflüssigkeit mit einer zugehörigen Pufferflüssigkeit und eine zweite Probenflüssigkeit mit einer zugehörigen Pufferflüssigkeit gefördert werden. In Rohrschlangen, die der Schlauchpumpe nachgeschaltet sind, werden die Probenflüssigkeiten mit den zugehörigen Pufferflüssigkeiten gemischt. Die so erhaltene Proben- und Pufferflüssigkeit wird auf ein erstes Ventil geleitet. In einer ersten Ventilstellung des ersten Ventils werden die Proben- und Pufferflüssigkeiten auf ein erstes Ende je einer zugehörigen Ionenaustauschersäule geleitet. Die anderen, zweiten Enden der Ionenaustauschersäulen sind jeweils mit einem Abfallauslaß verbunden. Die beiden Ionenaustauschersäulen werden dann parallel mit Probenflüssigkeit beladen, die Probe wird in den Säulen angereichert. Eine zweite Schlauchpumpe fördert eine eluierende Flüssigkeit und Wasser. Das Wasser wird in der ersten Stellung des Ventils auf den Zerstäüber eines Plasmabrenners geleitet. Die eluierende Flüssigkeit ist bei dieser ersten Stellung des Ventils mit einem Abfallauslaß verbunden. In der zweiten Stellung leitet das Ventil die eluierende Flüssigkeit auf das zweite Ende einer der Ionenaustauschersäulen, deren erstes Ende dann mit dem Zerstäüber verbunden wird. Durch ein Umschaltventil wird die jeweils von der eluierenden Flüssigkeit beaufschlagte Ionenaustauschersäule ausgewählt.

Durch die Verwendung von zwei Ionenaustauschersäulen, die parallel beladen werden, kann die Analysenzeit ungefähr halbiert werden. Statt der eluierenden Flüssigkeit wird während des Beladens der Ionenaustauschersäulen Wasser auf den Zerstäuber geleitet. Das Wasser spült den Zerstäuber und stabilisiert das Plasma.

Bei den bekannten Verfahren wird die eluierende Flüssigkeit mit der eluierten, angereicherten Probe auf einen Zerstäuber geleitet, der die Flüssigkeit in eine Flamme eines Atomabsorptions-Spektrometers zerstäubt.

Es ist auch bekannt, eine in einem Fließinjektionsverfahren vorbehandelte Probe für die Atomabsorptions-Spektroskopie in einen Ofen für die thermoelektrische Atomisierung einzugeben ("ANALYST" Bd.109 (März 1984), 323-325). Dabei wird jedoch die vorbehandelte Probe aus dem Fließinjektionssystem zunächst in ein offenes Probengefäß geleitet und aus diesem Probengefäß in den Ofen des Atomabsorptions-Spektrometers dosiert. Damit entfallen aber wesentliche Vorteile des Fließinjektionsverfahrens wie der vollständige Abschluß der Probe von der Umgebung und die Möglichkeit der Behandlung sehr kleiner Probemengen.

In einem Aufsatz von Hamann, Meier und Kettrup in "Fresenius Zeitschrift für analytische Chemie" (1989) 334: 231 - 234, ist die Bestimmung von Phenoxycarbonsäure-Herbiciden durch Hochdruckflüssigkeitschromatographie beschrieben, bei welchem eine Anreicherung der Herbicide an einer Vorsäule erfolgt.

Ein Aufsatz von Zhaolun Fang et al. in "Analytica Chimica Acta", 200 (1987) 35 - 49 beschreibt ein Fließinjektionssystem mit Voranreicherung einer Probe in einer Vorsäule, wobei die angereicherte Probe dann auf ein Atomabsorptions-Spektrometer geleitet wird. Dabei wird die Probe unmittelbar in die Flamme eines Atomabsorptions-Spektrometers eingeleitet.

Ein Aufsatz von Jackson und Haddad in "Journal of Chromatography" 439 (1988, 37 - 48) beschreibt eine Fließinjektionsanordnung mit Vorkonzentration von Anionen, bei welcher die vorkonzentrierte Probe durch einen UV-Absorptionsdetektor geleitet wird.

Die DE-C-29 00 066 beschreibt einen Probengeber, bei welchem Proben in Probengefäßen auf einem Drehtisch angeordnet sind. Ein Ansaugrohr saugt Probenflüssigkeit aus den Probengefäßen an und gibt diese in einen mit einer Probeneingabeöffnung versehenen Ofen zur elektrothermischen Atomisierung der Probe ein. Der Ofen wird von einem Meßlichtbündel eines Atomabsorptions-Spektrometers durchsetzt.

### Offenbarung der Erfindung

Der Erfindung liegt die Aufgabe zugrunde, die Nachweisgrenzen bei der Atomabsorptions-Spektroskopie zu erhöhen.

Dabei soll ein hoher Grad von Automatisierung der Analyse ermöglicht werden.

Erfindungsgemäß wird diese Aufgabe bei einer Anordnung der eingangs definierten Art dadurch gelöst, daß
(f) die ersten Pumpmittel zum Fördern des Verdrängungsdruckmittels ausgelegt sind,
(g) die zweiten Pumpmittel zum Fördern einer Spülflüssigkeit in die Sammelleitung ausgelegt sind,
(h) eine Steuereinrichtung zur Steuerung der ersten Pumpmittel und der zweiten Pumpmittel vorgesehen ist, so daß die ersten Pumpmittel während einer ersten Betriebsphase ein- und während einer darauffolgenden zweiten Betriebsphase ausgeschaltet sind und die zweiten Pumpmittel während der ersten Betriebsphase aus- und während der zweiten Betriebsphase eingeschaltet sind,
(i) eine Steuereinrichtung zur Steuerung der Ventilmittel vorgesehen ist, so daß die Ventilmittel in einem nach Beginn der zweiten Betriebsphase und innerhalb der zweiten Betriebsphase liegenden Zeitpunkt aus der ersten Ventilstellung in die zweite Ventilstellung umschaltbar sind, und
(j) die Mittel zum Eingeben der Probe in das Analysengerät von einer Dosierkapillare gebildet sind, die mit einem ersten Ende mit den Ventilmitteln verbunden und mit einem zweiten Ende in einen Teil des Analysengerätes einführbar ist.

Es erfolgt somit eine Anreicherung des gesuchten Elements auf der Ionenaustauschersäule. Störende Bestandteile der Probe werden nicht auf der Ionenaustauschersäule festgehalten und dadurch für die Atomabsorptions-Messung eliminiert. Das geschieht in einer Fließinjektions-Anordnung, also abgeschlossen von der Umgebung. Die auf der Ionenaustauschersäule festgehaltenen Probenbestandteile werden aber nicht wie bei den bekannten Anordnungen in den Zerstäuber eines Brenners eluiert und auch nicht in ein offenes Probengefäß geleitet sondern gelangen unmittelbar in eine Dosierkapillare, welche in einen Ofen des Atomabsorptions-Spektrometers einführbar ist. Es hat sich gezeigt, daß die auf der Ionenaustauschersäule zurückgehaltenen gesuchten Bestandteile mit einer Menge an eluierender Flüssigkeit eluiert werden kann, die von der Dosierkapillare aufgenommen wird, wobei wiederum das Volumen der Dosierkapillare nicht größer als die Aufnahmekapazität des Ofens für Probenflüssigkeit ist. Während eine Probe über die Ionenaustauschersäule geleitet wird, um die gesuchten Bestandteile der Probe auf dieser anzureichern, wird gleichzeitig die Dosierkapillare in eine Probeneingabeöffnung des Ofens eingeführt und das darin enthaltene Eluat von dem Verdrängungsdruckmittel in den Ofen gedrückt.

Bei der Erfindung sind die ersten Pumpmittel während einer ersten Betriebsphase ein- und während einer darauffolgenden zweiten Betriebsphase ausgeschaltet. Die zweiten Pumpmittel sind während der ersten Betriebsphase aus- und während der zweiten Betriebsphase eingeschaltet. Die Ventilmittel sind in einem innerhalb der zweiten Betriebsphase liegenden Zeitpunkt aus der ersten Ventilstellung in die zweite Ventilstellung umschaltbar. Das Verdrängungsdruckmittel wird von den ersten Pumpmitteln gefördert. Vorteilhafterweise ist das Verdrängungsdruckmittel ein Gas, beispielsweise Luft.

Durch die zweiten Pumpmittel ist in der zweiten Betriebsphase eine Spülflüssigkeit in eine Sammelleitung förderbar, über welche während der ersten Betriebsphase Probe und Pufferlösung von den ersten Pumpmitteln zu den Ventilmitteln geleitet wird und welche in der zweiten Ventilstellung mit einem Abflußauslaß verbunden ist. Zu diesem Zweck sind ein Probenanschluß und ein Anschluß für Pufferlösung ausgangsseitig von den ersten Pumpmitteln zu einer Sammelleitung zusammengeführt, die mit einem Sammelleitungs-Anschluß der Ventilmittel verbunden ist. Ein Spülmittelanschluß ist über die zweiten Pumpmittel und eine Verbindungsleitung mit der Sammelleitung verbunden. Der Sammelleitungs-Anschluß ist in der ersten Ventilstellung mit dem ersten Ende der Ionenaustauschersäule und in der zweiten Ventilstellung mit einem Abflußauslaß verbunden. ist.

Das Analysengerät ist ein Atomabsorptions-Spektrometer mit einem Ofen zur elektrothermischen Atomisierung der Probe. Die Dosierkapillare zur Abgabe der Probe ist in eine Probeneingabeöffnung des Ofens einführbar. Das Volumen der Dosierkapillare ist nicht größer als die Aufnahmekapazität des Ofens.

Vorteilhaft ist es, wenn die lonenaustauschersäule sich von dem zweiten Ende zu dem ersten Ende hin verjüngt. Die ersten und zweiten Pumpmittel sind von je einer Schlauchpumpe gebildet.

Ein Ausführungsbeispiel der Erfindung ist nachstehend unter Bezugnahme auf die zugehörigen Zeichnungen näher erläutert.

### Kurze Beschreibung der Zeichnungen

- Fig.1: ist eine schematische Darstellung einer Anordnung zur Anreicherung von Probensubstanz für die Atomabsorptions-Spektroskopie in einer ersten Ventilstellung, wobei die Anreicherung in einem Fließinjektions-System und die Atomisierung thermoelektrisch in einem Ofen erfolgt.
- Fig.2: zeigt die gleiche Anordnung in einer zweiten Ventilstellung.
- Fig.3: veranschaulicht die Zustände der Bauteile der Anordnung von Fig.1 und 2 im Verlauf eines Analysenzyklus.
- Fig.4: ist eine schematische Darstellung eines Atomabsorptions-Spektrometers mit einem Fließinjektions-System und einem Ofen zur elektrothermischen Atomisierung.

### Bevorzugte Ausführung der Erfindung

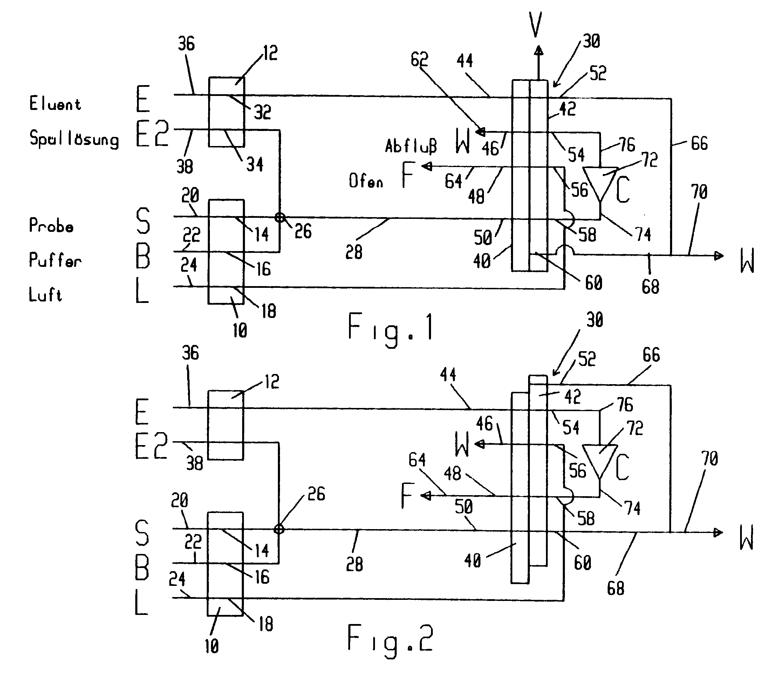

In Fig.1 und 2 sind mit 10 erste Pumpmittel in Form einer Schlauchpumpe und mit 12 zweite Pumpmittel, ebenfalls in Form einer Schlauchpumpe, bezeichnet.

Die Schlauchpumpe der ersten Pumpmittel 10 enthält drei Schlauchleitungen 14,16 und 18. Die Schlauchleitung 14 ist mit einem Probeneinlaß 20 verbunden. Der Probeneinlaß 20 kann beispielsweise mit einem Dosierrohr verbunden sein, das Probe aus einem Probengefäß auf einem Drehtisch oder Blind- oder Eichlösung ansaugt. Die Schlauchleitung 16 ist mit einem Puffereingang 22 verbunden, über welchen eine Pufferlösung ansaugbar ist. Die Schlauchleitung 18 ist mit einem Eingang 24 verbunden, über den ein Verdrängungsdruckmittel angesaugt wird. Das Verdrängungsdruckmittel ist bei der bevorzugten Ausführung einfach Luft. Die Schlauchleitungen 14 und 16 der Pumpmittel 10 sind in einem Vereinigungspunkt 26 zusammengeführt. Von dem Vereinigungspunkt 26 geht eine Sammelleitung 28 zu Ventilmitteln 30.

Die Schlauchpumpe der zweiten Pumpmittel 12 enthält zwei Schlauchleitungen 32 und 34. Die Schlauchleitung 32 ist mit einem Anschluß 36 verbunden, über welchen eine eluierende Flüssigkeit (Eluent) ansaugbar ist, beispiels weise Salzsäure. Die Schlauchleitung 34 ist mit einem Einlaß 38 verbunden. über den Einlaß 38 ist eine Spüllösung, beispielsweise de-ionisiertes Wasser, ansaugbar. Die Schlauchleitung 34 ist ebenfalls im Vereinigungspunkt 26 mit der Sammelleitung 28 verbunden.

Die Ventilmittel 30 sind hier als Schieberventil dargestellt und enthalten ein stationäres Ventilglied 40 und ein zwischen einer ersten Ventilstellung (Fig.1) und einer zweiten Ventilstellung (Fig.2) bewegliches Ventilglied 42. Das stationäre Ventilglied 40 hat einen ersten Anschluß 44, einen zweiten Anschluß 46, einen dritten Anschluß 48 und einen vierten Anschluß 50. Das bewegliche Ventilglied hat einen fünften Anschluß 52, einen sechsten Anschluß 54, einen siebten Anschluß 56, einen achten Anschluß 58 und einen neunten Anschluß 60. In der ersten Ventilstellung (Fig.1) ist der erste Anschluß 44 mit dem fünften Anschluß 52 verbunden. Der zweite Anschluß 46 ist mit dem sechsten Anschluß 54 verbunden. Der dritte Anschluß 48 ist mit dem siebten Anschluß 56 verbunden. Der vierte Anschluß 50 ist mit dem achten Anschluß 58 verbunden. In der zweiten Ventilstellung (Fig.2) ist der erste Anschluß 44 mit dem sechsten Anschluß 54 verbunden.

Der zweite Anschluß 46 ist mit dem siebten Anschluß 56 verbunden. Der dritte Anschluß 48 ist mit dem achten Anschluß 58 verbunden. Der vierte Anschluß 50 ist mit dem neunten Anschluß 60 verbunden.

Die Schlauchleitung 32 der zweiten Pumpmittel 12 ist zu dem ersten Anschluß 44 der Ventilmittel 30 geführt. Der zweite Anschluß 46 ist mit einem Abflußauslaß 62 verbunden. An den dritten Anschluß 48 ist eine Dosierkapillare 64 angeschlossen. Der vierte Anschluß 50 der Ventilmittel 30 ist mit der Sammelleitung 28 verbunden.

Der fünfte Anschluß 52 und der neunte Anschluß 60 sind über Leitungen 66 und 68 mit einem Abflußanschluß 70 verbunden. Zwischen dem sechsten Anschluß 54 und dem achten Anschluß 58 liegt eine Ionenaustauschersäule 72. Die Ionenaustauschersäule 72 hat ein erstes Ende 74, das mit dem achten Anschluß 58 verbunden ist, und ein zweites Ende 76, das mit dem sechsten Anschluß 54 der Ventilmittel 30 verbunden ist. Die Ionenaustauschersäule 72 verjüngt sich von dem zweiten Ende 76 zu dem ersten Ende 74 hin. Schließlich ist der siebte Anschluß 56 der Ventilmittel 30 mit der Schlauchleitung 18 der ersten Pumpmittel 10 verbunden.

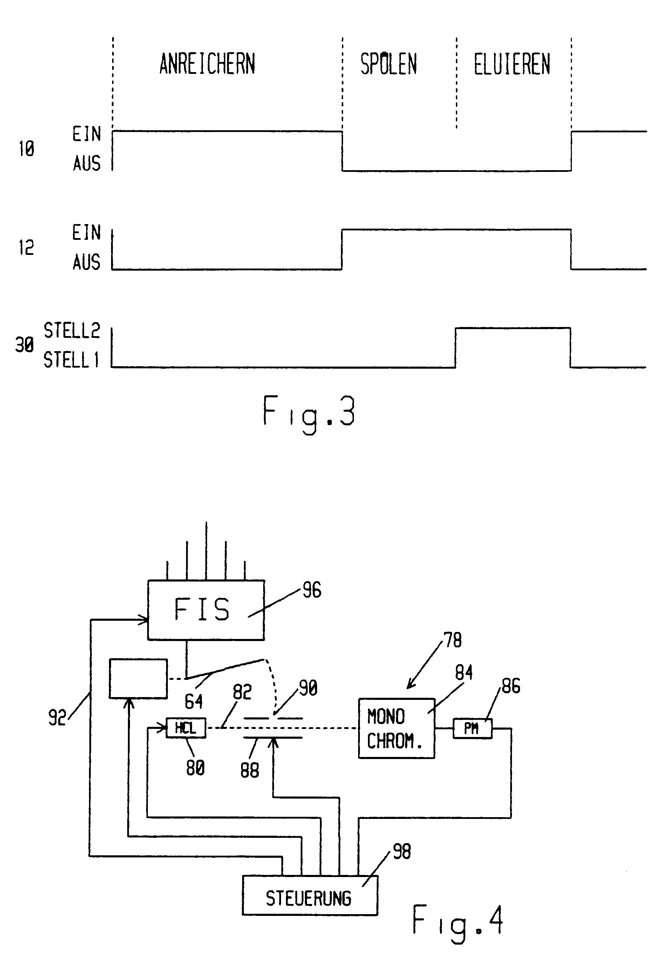

In Fig.4 ist schematisch ein Atomabsorptions-Spektrometer 78 dargestellt. Das Atomabsorptions-Spektrometer 78 weist eine Hohlkathodenlampe 80 auf, von welcher ein Meßlichtbündel 82 ausgeht. Das Meßlichtbündel tritt durch einen Monochromator 84 und fällt auf einen Detektor 86. Zur Atomisierung der Probe ist ein Ofen 88 vorgesehen, der durch Hindurchleiten von elektrischem Strom auf Atomisierungstemperatur aufheizbar ist. Das Meßlichtbündel 82 tritt durch die Längsbohrung des rohrförmigen Ofens 88 hindurch. Mit 90 ist eine Probeneingabeöffnung des Ofens 88 bezeichnet.

Die Dosierkapillare 64 ist durch einen Stellmotor 92 in die Probeneingabeöffnung des Ofens 88 einführbar, wie durch den gestrichelten Bogen 94 angedeutet ist. Das Fließinjektions-System als Ganzes, das in Fig.1 und 2 dargestellt ist, ist in Fig.4 durch einen Block 96 dargestellt. Die gesamte Anordnung ist durch ein Steuergerät 98 zur Durchführung eines bestimmten Programms steuerbar.

Fig.3 zeigt die Zustände der Pumpmittel 10 und 12 und der Ventilmittel 30 in den verschiedenen Betriebsphasen. In einer ersten Betriebsphase sind die Pumpmittel 10 ein- und die Pumpmittel 12 ausgeschaltet. Die Ventilmittel 30 sind in der Ventilstellung "1". Das ist der Zustand "Anreichern", der in Fig.1 dargestellt ist. In einer zweiten Betriebsphase sind die Pumpmittel 10 aus- und die Pumpmittel 12 eingeschaltet. In der ersten Hälfte dieser ersten Betriebsphase sind die Ventilmittel 30 noch in der Ventilstellung "1". Es ergibt sich dann die Funktion "Spülen". Im Verlauf der zweiten Betriebsphase werden dann die Ventilmittel 30 umgeschaltet in die Stellung "2". Dann ergibt sich der in Fig.2 dargestellte Zustand. Das ist die Funktion "Eluieren". Die verschiedenen Zustände werden von dem Steuergerät 98 gesteuert und in geeigneter Weise mit der Funktion des Atomabsorptions-Spektrometers 78, des Ofens 88 und des Stellmotors 92 synchronisiert.

Die Wirkungsweise der beschriebenen Anordnung ist wie folgt:
In dem in Fig.1 dargestellten Zustand sind die Ventilmittel 30 in der ersten Ventilstellung. Es laufen die ersten Pumpenmittel 10, während die zweiten Pumpenmittel 12 stillstehend sind. Dadurch werden Probe über Eingang 20 und Schlauchleitung 14 und Pufferlösung über Eingang 22 und Schlauchleitung 16 angesaugt. Probe und Pufferlösung werden in dem Vereinigungspunkt 26 zusammengeführt und über die Sammelleitung 28 auf den vierten Anschluß der Ventilmittel 30 geleitet. In der ersten Ventilstellung wird das so erhaltene Gemisch von Probe und Pufferlösung über Anschluß 58 der Ventilmittel auf das erste Ende 74 der Ionenaustauschersäule 72 geleitet. Das Gemisch strömt durch die Ionenaustauschersäule 72 und über deren zweites Ende 76 und die Anschlüsse 54 und 46 der Ventilmittel 30 zu dem Ablaufanschluß 62. Bei dem Durchströmen der Ionenaustauschersäule 72 werden gesuchte Komponenten der Probe auf der Ionenaustauschersäule 72 zurückgehalten und dort angereichert. Störende Bestandteile (Matrix) strömen zum überwiegenden Teil durch die Ionenaustauschersäule 72 hindurch und über den Abflußanschluß ab. Dadurch erfolgt einmal eine Anreicherung der gesuchten Komponenten. Zum anderen werden störende Bestandteile eliminiert. Diese störenden Bestandteile können daher die anschließende Messung im Atomabsorptions-Spektrometer nicht mehr stören. Es wird auch die Menge der zu atomisierenden Substanz bezogen auf die Menge der gesuchten Komponenten erheblich reduziert. Die Pufferlösung hat den Zweck, eine solche Zusammensetzung des Gemisches, z.B. einen solchen pH-Wert zu erzeugen, daß tatsächlich die gesuchten Komponenten auf der Ionenaustauschersäule 72 zurückgehalten werden. Die konisch sich verjüngende Form der Ionenaustauschersäule 72 bewirkt, daß die gesuchten Komponenten der Probe zunächst in der Spitze der Ionenaustauschersäule 72 zurückgehalten werden. Sie sind dort räumlich sehr stark konzentriert und können daher anschließend, wie noch erläutert werden wird, sehr schnell und in einem sehr engen "Paket" eluiert werden.

Während in der beschriebenen Weise eine Anreicherung gesuchter Komponenten aus einer Probe erfolgt, werden gleichzeitig die gesuchten Komponenten aus der vorhergehenden Probe, die in noch zu beschreibender Weise in die Dosierkapillare 64 eluiert wurden, in den Ofen 88 abgegeben. Die Dosierkapillare 64 wird durch die Probeneingabeöffnung 90 mit ihrem freien Ende in den Ofen 88 eingeführt. Die von den ersten Pumpenmitteln über den Eingang 24 angesaugte und in der Schlauchleitung 18 geförderte Luft wird über Anschluß 56 und Anschluß 48 der Ventilmittel in das rückwärtige Ende der Dosierkapillare 64 gedrückt und verdrängt die darin enthaltenen eluierten Probenkomponenten. Diese werden in den Ofen 88 gedrückt. Dann wird die Dosierkapillare aus dem Ofen 88 herausgeschwenkt. Der Ofen wird auf Atomisierungstemperatur aufgeheizt.

Anschließend werden die ersten Pumpenmittel 10 angehalten und dafür die zweiten Pumpenmittel 12 eingeschaltet. Die Ventilmittel 30 bleiben dabei in ihrer ersten Stellung von Fig.1. Jetzt wird eine Spülflüssigkeit vom Eingang 38 über Schlauchleitung 34, Vereinigungspunkt 26, Sammelleitung 28, Anschluß 50 und Anschluß 58 vom ersten Ende 74 her zum zweiten Ende 76 durch die Ionenaustauschersäule 72 und über Anschluß 54 und Anschluß 46 zum Ablaufanschluß 62 geleitet. Das System wird dadurch von den Resten der Probe gereinigt. Die an der Ionenaustauschersäule 72 zurückgehaltenen Komponenten der Probe werden von diesem Spülvorgang nicht beeinflußt. Das ist in Fig.3 durch die Funktion "Spülen" gekennzeichnet. Die eluierende Flüssigkeit vom Eingang 36 wird dabei auf den Auslaßanschluß 70 geleitet.

Als nächster Schritt werden dann die Ventilmittel 30 in die zweite Ventilstellung umgeschaltet. Es laufen weiterhin die zweiten Pumpmittel 12, während die ersten Pumpmittel 10 stillstehen. Das ist in Fig.2 dargestellt. In Fig.3 entspricht das der Funktion "Eluieren". Es wird nun eluierende Flüssigkeit, z.B. Salzsäure, vom Eingang 36 über die Schlauchleitung 32, den ersten Anschluß 44 und den sechsten Anschluß 54 vom zweiten Ende 76 her zum ersten Ende 74 durch die Ionenaustauschersäule 72 geleitet. Dadurch werden die in der Ionenaustauschersäule 72 zurückgehaltenen, gesuchten Komponenten der Probe eluiert und mit der eluierenden Flüssigkeit in die Dosierkapillare 64 transportiert. Hierfür genügt eine Menge von eluierender Flüssigkeit, die von der Dosierkapillare 64 vollständig aufgenommen werden kann. Das Volumen der Dosierkapillare 64 ist dabei wiederum nicht größer als die Aufnahmekapazität des Ofens 88 für Probenflüssigkeit.

Aus der Dosierkapillare 64 werden die eluierten Komponenten mit der eluierenden Flüssigkeit während der Anreicherung der nächsten Probe in der oben beschriebenen Weise in den Ofen 88 dosiert.

Die Spülflüssigkeit vom Eingang 38 strömt bei der zweiten Ventilstellung von der Schlauchleitung 38 über die Sammelleitung 28 und über die Anschlüsse 50 und 60 der Ventilmittel 30 zu dem Auslaßanschluß 70. Die Sammelleitung wird dabei weiter gespült.

## Patentansprüche

1. Anordnung zur Anreicherung von Probensubstanz für spektroskopische Zwecke bei der Fließinjektions-Analyse, enthaltend
(a) erste Pumpmittel (10) zum Fördern einer Probenflüssigkeit (S) und einer Pufferflüssigkeit (B) in eine Sammelleitung (28),
(b) zweite Pumpmittel (12) zum Fördern einer eluierenden Flüssigkeit in eine Leitung (44),
(c) eine Ionenaustauschersäule (72), durch welche die zu bestimmenden Elemente zurückgehalten werden und aus welcher die zu bestimmenden Elemente von der eluierenden Flüssigkeit eluierbar sind mit einem ersten Ende (74) und einem zweiten Ende (76),
(d) Mittel (64) zum Eingeben einer Probe in ein Analysengerät (78), und
(e) Ventilmittel (30), durch welche
- in einer ersten Ventilstellung das erste Ende (74) der Ionenaustauschersäule (72) mit der Sammelleitung (28) und das zweite Ende (76) der Ionenaustauschersäule (72) mit einem ersten Abfallauslaß (62) und die Mittel (64) zum Eingeben von Probe in das Analysengerät (78) mit einer Quelle (24) eines Verdrängungsdruckmittels (L) verbunden sind,
- in einer zweiten Ventilstellung das zweite Ende (76) der Ionenaustauschersäule (72) mit der Leitung (44) und das erste Ende (74) mit den Mitteln (64) zum Eingeben von Probe in ein spektroskopisches Analysengerät (78), sowie die Sammelleitung (28) mit einem zweiten Abfallauslaß (70) verbunden sind,
**dadurch gekennzeichnet,** daß
(f) die ersten Pumpmittel (10) zum Fördern des Verdrängungsdruckmittels (L) ausgelegt sind,
(g) die zweiten pumpmittel zum Fördern einer Spülflüssigkeit (E2) in die Sammelleitung (28) ausgelegt sind,
(h) eine Steuereinrichtung (98) zur Steuerung der ersten pumpmittel (10) und der zweiten Pumpmittel (12) vorgesehen ist, so daß die ersten pumpmittel (10) während einer ersten Betriebsphase ein- und während einer darauffolgenden zweiten Betriebsphase ausgeschaltet sind und die zweiten Pumpmittel (12) während der ersten Betriebsphase aus- und während der zweiten Betriebsphase eingeschaltet sind,
(i) eine Steuereinrichtung (98) zur Steuerung der Ventilmittel (30) vorgesehen ist, so daß die Ventilmittel (30) in einem nach Beginn der zweiten Betriebsphase und innerhalb der zweiten Betriebsphase liegenden Zeitpunkt aus der ersten Ventilstellung in die zweite Ventilstellung umschaltbar sind, und
(j) die Mittel zum Eingeben der Probe in das Analysengerät von einer Dosierkapillare (64) gebildet sind, die mit einem ersten Ende mit den Ventilmitteln (30) verbunden und mit einem zweiten Ende in einen Teil (88) des Analysengerätes (78) einführbar ist.

2. Anordnung nach Anspruch 1, **dadurch gekennzeichnet,** daß das Verdrängungsmittel ein Gas ist.

3. Anordnung nach Anspruch 1, **dadurch gekennzeichnet,** daß das Verdrängungsmittel eine Flüssigkeit ist.

4. Anordnung nach einem der vorangegangenen Ansprüche, dadurch gekennzeichnet, daß
(a) ein Probenanschluß (20, 14) und ein Anschluß (22, 16) für Pufferlösung ausgangsseitig von den ersten Pumpmitteln (10) zu der Sammelleitung (28) zusammengeführt sind, die mit dem Sammelleitungs-Anschluß (50) der Ventilmittel (30) verbunden ist,
(b) ein Spülmittelanschluß (38) über die zweiten Pumpmittel (12) und eine Verbindungsleitung (34) mit der Sammelleitung (28) verbunden ist.

5. Anordnung nach einem der vorangegangenen Ansprüche, **dadurch gekennzeichnet,** daß
(a)das Analysengerät ein Atomabsorptions-Spektrometer (78) mit einem Ofen (88) zur elektrothermischen Atomisierung der Probe ist und
(b) die Dosierkapillare (64) zur Abgabe der Probe in eine Probeneingabeöffnung (90) des Ofens (88) einführbar ist.

6. Anordnung nach Anspruch 5, **dadurch gekennzeichnet,** daß das Volumen der Dosierkapillare (64) nicht größer ist als die Aufnahmekapazität des Ofens (88).

7. Anordnung nach einem der vorangegangenen Ansprüche, **dadurch gekennzeichnet**, daß die Ionenaustauschersäule (72) sich von dem zweiten Ende (76) zu dem ersten Ende (74) hin verjüngt.

8. Anordnung nach einem der vorangegangenen Ansprüche, **dadurch gekennzeichnet,** daß die ersten und zweiten Pumpmittel (10 bzw.12) von je einer Schlauchpumpe gebildet sind.

## Claims

1. An arrangement for concentrating a sample substance for spectroscopic purposes in flow injection analysis, the arrangement comprising
a) first pump means (10) for conveying a sample liquid (S) and a buffer liquid (B) to a collecting pipe (28),
b) second pump means (12) for conveying an eluting liquid to a pipe (44),
c) an ion exchange column (72) by which the elements for analysis are retained and from which the elements for analysis can be eluted by the eluting liquid, the column having a first end (74) and a second end (76),
d) means (64) for supplying a sample to an analytical device (78) and
e) valve means (30) by means of which
- in a first valve position, the first end (74) of the ion exchange column (72) is connected to the collecting pipe (28) and the second end (76) of the ion exchange column (72) is connected to a first discharge outlet (62) and the means (64) for introducing the sample to the analytical device (78) are connected to a source (74) of a displacement pressure medium (L),
- in a second valve position, the second end (76) of the ion exchange column (72) is connected to the pipe (44) and the first end (74) is connected to the means (64) for introducing a sample into a spectroscopic analytical device (78), and the collecting pipe (28) is connected to a second discharge outlet (70).
characterised in that
f) the first pump means (10) are designed for conveying the displacement pressure medium (L)
g) the second pump means are designed for conveying a rinsing liquid (E2) to the collecting pipe (28),
h) a control device (98) is provided for controlling the first pump means (10) and the second pump means (12), so that during a first operating phase the first pump means (10) is switched on and during a subsequent second operating phase it is switched off, and during the first operating phase the second pump means (12) is switched off and during the second operating phase it is switched on,
i) a control device (98) is provided for controlling the valve means (30), so that the valve means (30) can be switched over from the first valve position to the second valve position at a time after the beginning of the second operating phase and within the second operating phase, and
j) the means for introducing the sample into the analytical device comprise a metering capillary (64), the first end of which is connected to the valve means (30) and the second end of which can be inserted into a part (88) of the analytical device (78).

2. An arrangement according to claim 1, characterised in that the displacement medium is a gas.

3. An arrangement according to claim 1, characterised in that the displacement medium is a liquid.

4. An arrangement according to any of the preceding claims, characterised in that
a) a sample connection (20, 14) and a connection (22, 16) for buffer solution on the outlet side of the first pump means (10) are joined to form the collecting pipe (28) connected to the collecting-pipe connection (50) of the valve means (30),
b) a rinsing-means connection (38) is connected via the second pump means (12) and a connecting pipe (34) to the collecting pipe (28).

5. An arrangement according to any of the preceding claims, characterised in that
a) the analytical device is an atom absorption spectrometer (78) with a furnace (88) for electro-thermal atomisation of the sample, and
b) the metering capillary (64) for delivering the sample can be inserted into a sample feed opening (90) in the furnace (88).

6. An arrangement according to claim 5, characterised in that the volume of the metering capillary (64) is not greater than the holding capacity of the furnace (88).

7. An arrangement according to any of the preceding claims, characterised in that the ion exchange column (72) tapers from the second end (76) to the first end (74).

8. An arrangement according to any of the preceding claims, characterised in that the first and the second pump means (10, 12) respectively are each in the form of a hose pump.

## Revendications

1. Système pour enrichir une substance à analyser par voie spectroscopique lors d'une analyse par injection dans l'écoulement, comprenant :
a) des premiers moyens de pompage (10) destinés à refouler un liquide à analyser (S) et un liquide tampon (B) dans une conduite collectrice (28),
b) des deuxièmes moyens de pompage (12) destinés à refouler un liquide éluant dans une conduite (44),
c) une colonne échangeuse d'ions (72) qui est pourvue d'une première extrémité (74) et d'une deuxième extrémité (76), par laquelle les éléments à déterminer sont retenus et à partir de laquelle les éléments à déterminer peuvent être élués par le liquide éluant,
d) des moyens (64) pour introduire un échantillon dans un appareil d'analyse (78), et :
e) des moyens à valve (30) par lesquels :
- dans une première position de la valve, la première extrémité (74) de la colonne échangeuse d'ions (72) est reliée à la conduite collectrice (28), la deuxième extrémité (76) de la colonne échangeuse d'ions (72) est reliée à une première sortie d'évacuation (62), et les moyens (64) pour introduire un échantillon dans l'appareil d'analyse (78) sont reliés à une source (24) d'un agent de déplacement sous pression (L),
- dans une deuxième position de la valve, la deuxième extrémité (76) de la colonne échangeuse d'ions (72) est reliée à la conduite (44), sa première extrémité (74) est reliée aux moyens (64) pour introduire un échantillon dans un appareil d'analyse spectroscopique (78), et la conduite collectrice (28) est reliée à une deuxième sortie d'évacuation (70),
caractérisé par le fait que :
f) les premiers moyens de pompage (10) sont destinés à refouler l'agent de déplacement sous pression (L),
g) les deuxièmes moyens de pompage sont destinés à refouler un liquide de rinçage (E2) dans la conduite collectrice (28),
h) il est prévu un dispositif de commande (98) qui est destiné à commander les premiers moyens de pompage (10) et les deuxièmes moyens de pompage (12) d'une manière telle que les premiers moyens de pompage (10) soient en marche pendant une première phase de fonctionnement et arrêtés pendant une deuxième phase de fonctionnement qui suit et que les deuxièmes moyens de pompage (12) soient arrêtés pendant la première phase de fonctionnement et en marche pendant la deuxième phase de fonctionnement,
i) il est prévu un dispositif de commande (98) qui est destiné à commander les moyens à valve (30) d'une manière telle que les moyens à valve (30) puissent passer de la première position de la valve à la deuxième position de la valve à un instant situé après le début de la deuxième phase de fonctionnement et à l'intérieur de la deuxième phase de fonctionnement et :
j) les moyens pour introduire l'échantillon dans l'appareil d'analyse sont constitués par un capillaire de dosage (64) qui est relié par une première extrémité aux moyens à valve (30) et qui peut être introduit par une deuxième extrémité dans une partie (88) de l'appareil d'analyse (78).

2. Système selon la revendication 1, caractérisé par le fait que l'agent de déplacement est un gaz.

3. Système selon la revendication 1, caractérisé par le fait que l'agent de déplacement est un liquide.

4. Système selon l'une des revendications précédentes, caractérisé par le fait que :
a) un raccord (20, 14) destiné à l'échantillon et un raccord (22, 16) destiné à la solution tampon sont réunis, du côté de la sortie des premiers moyens de pompage (10), à la conduite collectrice (28) qui est reliée à un raccord (50) des moyens à valve (30) destiné à la conduite collectrice, et :
b) un raccord (38) destiné à l'agent de rinçage est relié à la conduite collectrice (28) par l'intermédiaire des deuxièmes moyens de pompage (12) et d'une conduite de liaison (34).

5. Système selon l'une des revendications précédentes, caractérisé par le fait que :
a) l'appareil d'analyse est un spectromètre à absorption atomique (78) qui comprend un four (88) en vue de l'atomisation électrothermique de l'échantillon, et :
b) le capillaire de dosage (64) peut être introduit dans une ouverture (90) du four (88) qui est destinée à l'entrée de l'échantillon en vue de l'alimentation en échantillon.

6. Système selon la revendication 5, caractérisé par le fait que le volume du capillaire de dosage (64) n'est pas supérieur à la capacité du four (88).

7. Système selon l'une des revendications précédentes, caractérisé par le fait que la colonne échangeuse d'ions (72) se rétrécit depuis la deuxième extrémité (76) jusqu'à la première extrémité (74).

8. Système selon l'une des revendications précédentes, caractérisé par le fait que les premiers et deuxième moyens de pompage (10, respectivement 12) sont constitués chacun par une pompe péristaltique.
